# EUROPÄISCHE PATENTSCHRIFT

(11) **EP 3 538 418 B1**
(45) Veröffentlichungstag und Bekanntmachung des Hinweises auf die Patenterteilung: **31.03.2021**
(21) Anmeldenummer: 17761870.9
(22) Anmeldetag: 05.09.2017
(51) Int. Cl.: F16C 19/18, F16C 23/08, F16C 27/06, B62D 5/04, F16C 33/60

(54) **FESTLAGER UND LENKGETRIEBE**
FIXED BEARING AND STEERING GEAR
PALIER FIXE ET MÉCANISME DE DIRECTION

(30) Priorität: 09.11.2016 DE 102016121412
(43) Veröffentlichungstag der Anmeldung: 18.09.2019
(73) Patentinhaber: Robert Bosch GmbH, 70442 Stuttgart (DE)
(72) Erfinder: HAFERMALZ, Jens-Uwe, 73116 Wäschenbeuren (DE); KNEER, Ekkehard, 73240 Wendlingen (DE); FUECHSEL, Dennis, 73527 Schwäbisch Gmünd (DE)
(86) Internationale Anmeldenummer: PCT/EP2017/072171
(87) Internationale Veröffentlichungsnummer: WO 2018/086782

(56) Entgegenhaltungen:
- EP-A1- 2 250 405
- EP-A1- 2 513 503
- EP-A1- 2 694 355
- EP-A1- 2 991 887
- EP-A2- 2 594 457
- WO-A1-2011/015374
- DE-A1- 19 807 514
- US-A- 5 454 438

## Beschreibung

Die Erfindung betrifft ein Festlager für ein Lenkgetriebe. Die Erfindung betrifft weiterhin ein Lenkgetriebe für ein Lenksystem, insbesondere ein Hilfskraftlenksystem, eines Kraftfahrzeugs mit einem solchen Festlager.

Bei den meisten Kraftfahrzeugen werden Hilfskraftlenksysteme verbaut, die beim Lenken ein unterstützendes Drehmoment erzeugen und dadurch das von dem Fahrer auf die Lenksäule aufzubringende Lenkmoment reduzieren.

Die bekannten Hilfskraftlenksysteme basieren auf einem Lenkgetriebe, das die Antriebsleistung eines hydraulischen oder elektrischen Lenkmotors übersetzt und auf beispielsweise die Lenksäule überträgt. Derartige Lenkgetriebe sind regelmäßig in Form eines Schraubwälzgetriebes und insbesondere als Schraubradgetriebe oder Schneckengetriebe ausgebildet. Diese umfassen ein Zahnrad, das direkt oder indirekt mit der Lenksäule verbunden ist, sowie ein damit kämmendes, über eine Welle von dem Antrieb angetriebenes Ritzel.

Als problematisch bei derartigen Lenkgetrieben hat sich Getriebespiel gezeigt, das sich aufgrund von Bauteiltoleranzen, unterschiedlichen Wärmedehnungen der Getriebeelemente, aufgrund von Verschleiß und/oder eines Setzens des Materials bei Zahnrädern aus Kunststoff ausbildet. Insbesondere bei einem sogenannten Wechsellenken, d.h. bei einem direkt aufeinander folgenden Lenken mit wechselnder Lenkeinschlagsrichtung, erzeugt ein solches Getriebespiel unerwünschte Geräusche, die aus dem abwechselnden Anlegen gegenüberliegender Flanken der Zähne von Ritzel und Zahnrad resultieren.

Bekannt ist, dieses Getriebespiel dadurch zu eliminieren, dass die Ritzelwelle verschwenkbar um eine Achse, die senkrecht zur der Längsachse der Ritzelwelle und in einem Abstand zu dem Verzahnungseingriff von Ritzel und Zahnrad verläuft, gelagert ist und mittels eines oder mehrerer Federelemente gegen das Zahnrad gedrückt wird. Die Verschwenkbarkeit der Ritzelwelle wird dabei regelmäßig in eine der zwei Lagerungen, über die die Ritzelwelle endseitig gelagert ist, integriert. Diese Lagerung wird als "Festlager" bezeichnet. Die Lagerung im Bereich des anderen Endes ist dann mit einem definierten Spiel ausgeführt (sogenanntes "Loslager"), um die durch die Schwenkbewegung hervorgerufene Auslenkung zu ermöglichen. Das Festlager ist regelmäßig antriebsseitig vorgesehen, während das Loslager an dem freien Ende der Ritzelwelle vorgesehen ist. Das oder die Federelemente zum Andrücken des Ritzels an das Zahnrad können dabei sowohl in das Loslager als auch das Festlager integriert sein.

Ein solches Lenkgetriebe, bei dem die Federkraft für die Anfederung mittels des Festlagers erzeugt wird, ist beispielsweise aus der DE 10 2009 054 655 A1 bekannt. Bei diesem Lenkgetriebe ist vorgesehen, das Wälzlager, das die Ritzelwelle im Bereich des Festlagers aufnimmt, außenseitig in einer Schwenkhülse zu lagern. Die Schwenkhülse umfasst eine Lagerhülse, die das Wälzlager weitgehend spielfrei aufnimmt, und einen Außenring, der weitgehend spielfrei in einer Aufnahme eines Gehäuses des Lenkgetriebes gehalten ist, wobei der Außenring und die Lagerhülse über mehrere Torsionsstege verbunden sind, die bei einem Verdrehen von Außenring zu Lagerhülse tordiert werden. Nach der Montage des Lenkgetriebes sind die Torsionsstege derart tordiert, dass die dadurch erzeugte elastische Rückstellwirkung die Anfederung der Ritzelwelle bewirkt.

Ausgestaltungen von Lenkgetrieben, die zu demjenigen der DE 10 2009 054 655 A1 ähnlich sind, sind aus der DE 10 2008 040 673 A1, der EP 2 836 416 B1, der WO2014/177338 A1, die den Oberbegriff des unabhängigen Anspruchs zeigt, und der EP 2 836 417 B1 bekannt.

Bei den aus den genannten Druckschriften bekannten Lenkgetrieben kommen einreihige Rillenkugellager herkömmlicher Bauart zum Einsatz. Diese umfassen jeweils eine einteilige innere Lagerschale und eine einteilige äußere Lagerschale. Die Lagerschalen bilden jeweils eine Führungsrille zur Aufnahme und Führung von Kugeln aus. Die Montage eines solchen Rillenkugellagers erfordert einen zwischen den Lagerschalen ausgebildeten Ringspalt mit einer definierten Mindestbreite, die so bemessen ist, dass die Kugeln bei einer maximal möglichen exzentrischen Anordnung der inneren Lagerschale innerhalb der äußeren Lagerschale im Rahmen der Montage in den dann sichelförmigen Spalt eingesetzt werden können. Diese Mindestbreite des Ringspalts begrenzt die Größe, mit der die Schultern der Führungsrillen die Kugeln in radialer Richtung bezüglich der Längsachse beziehungsweise bezüglich der Rotationsachse des Kugellagers überdecken. Durch die relativ hohe Kippbelastung des Kugellagers in einem Lenkgetriebe, wie es aus den genannten Druckschriften bekannt ist, laufen die Kugeln am Rand der Laufbahnschultern. Die Tragfähigkeit eines derart belasteten Kugellagers hängt daher in erheblichem Maße von der Größe der Überdeckung der Schultern der Führungsrillen bezüglich der Kugeln ab. Bei einem relativ kleinen Kugellager würde nämlich keine volle Druckellipse der Kugeln auf der Laufbahn der Führungsrillen ausgebildet werden. Eine Lösung für dieses Problem könnte darin liegen, das Kugellager möglichst groß zu dimensionieren, wodurch eine möglichst große Abstützfläche der Kugeln auf der Laufbahn realisiert wird. Solche relativ großen Kugellager erfordern jedoch einen entsprechend großen Bauraum im Lenkgetriebe, der häufig nicht vorhanden ist oder sich aufgrund einer entsprechend vergrößerten Ausgestaltung des Lenkgetriebes insgesamt nachteilig auswirkt.

Aus der EP 2 250 405 B1 ist noch ein Lenkgetriebe für ein Lenksystem eines Kraftfahrzeugs bekannt, bei dem eine Ritzelwelle innerhalb eines Gehäuses gelagert ist, wobei entweder die Ritzelwelle oder ein auf der Ritzelwelle angeordneter Lagerring eine umlaufende Führungsrille ausbildet, auf der eine Mehrzahl von Kugeln in einer umlaufenden Kugelreihe abrollen können. Die Längserstreckung beziehungsweise der Radius der Führungsrillen ist größer als die Längserstreckung der von diesen aufgenommenen Abschnitte der Kugeln beziehungsweise als der Radius der Kugeln. Außenseitig sind die Kugeln in zwei Lagerringen gelagert, die jeweils auf der bezüglich des anderen Lagerrings distalen Seite an dem Gehäuse abgestützt sind, wobei diese Abstützung bei einem der Lagerringe direkt und bei dem anderen Lagerring unter Zwischenschaltung eines eine axiale Vorspannkraft erzeugenden Federelements vorgesehen ist. Durch diese Lagerung wird die Ritzelwelle in axialer Richtung vorgespannt. Diese Vorspannung führt in Kombination mit einer längsaxialen Verschiebung der Kugeln innerhalb der Führungsrillen zu einer Rückstellkraft, die einer auftretenden Verschiebung der Ritzelwelle, unabhängig von der Richtung dieser Verschiebung, entgegenwirkt. Zweireihige Ausführungen entsprechender Lagerungen der Ritzelwelle sind in der EP 2 250 405 B1 ebenfalls offenbart.

Die DE 198 07 514 A1 offenbart ein Radialkugellager, dessen innerer Lagerring zweiteilig ausgebildet ist, wobei wenigstens einer der beiden Lagerringteile in radialer und in axialer Richtung verschiebbar ist und der äußere Lagerring eine Laufbahn aufweist, deren Radius deutlich größer als der Radius der Lagerkugeln ist. Dadurch soll ein begrenztes Kippen einer innerhalb des inneren Lagerrings aufgenommenen Welle bei gleichzeitiger Lagerspielfreiheit ermöglicht sein.

Der Erfindung liegt die Aufgabe zugrunde, ein Festlager für ein Lenkgetriebe, wie es grundsätzlich aus der DE 10 2009 054 655 A1, der DE 10 2008 040 673 A1, der EP 2 836 416 B1 und der EP 2 836 417 B1 bekannt ist, anzugeben, das bei relativ hoher Tragfähigkeit relativ klein dimensioniert werden kann.

Diese Aufgabe wird durch ein Festlager gemäß dem Patentanspruch 1 gelöst. Ein Lenkgetriebe für ein Lenksystem eines Kraftfahrzeugs ist Gegenstand des Patentanspruchs 8. Gegenstand des Patentanspruchs 9 ist zudem ein Lenksystem mit einem solchen Lenkgetriebe. Vorteilhafte Ausgestaltungen des erfindungsgemäßen Festlagers und damit des erfindungsgemäßen Lenkgetriebes und des erfindungsgemäßen Lenksystems sind Gegenstände der abhängigen Patentansprüche und/oder ergeben sich aus der nachfolgenden Beschreibung der Erfindung.

Ein erfindungsgemäßes Festlager für ein Lenkgetriebe umfasst ein Kugellager, das eine innere Lagerschale, die zur Aufnahme einer Ritzelwelle des Lenkgetriebes vorgesehen ist, und eine äußere Lagerschale, die in einer Lagerhülse aufgenommen ist, aufweist, wobei die innere Lagerschale und die äußere Lagerschale jeweils mindestens eine Führungsrille zur Aufnahme und Führung von Kugeln des Kugellagers aufweisen. Die Führungsrille(n) ist/sind in bekannter Weise doppelt gekrümmt ausgebildet, nämlich einmal in Umfangsrichtung und andererseits (zumindest abschnittsweise) im Querschnitt. Dabei kann vorzugsweise vorgesehen sein, dass der Radius der Krümmung im Querschnitt im Wesentlichen dem Radius der Kugeln entspricht. Ein erfindungsgemäßes Festlager umfasst weiterhin einen Schwenkring, der einen Außenring sowie einen Innenring aufweist, die über einen oder mehrere Torsionsstege verschwenkbar verbunden sind, wobei der Innenring mit der Lagerhülse verbunden ist (was eine integrale und insbesondere einteilige Ausgestaltung umfassen soll) und der Außenring zur Lagerung des Festlagers in einem Gehäuse des Lenkgetriebes vorgesehen ist. Ein solches Festlager ist erfindungsgemäß dadurch gekennzeichnet, dass die innere Lagerschale und/oder die äußere Lagerschale mindestens und vorzugsweise exakt zwei Teilschalen umfasst, von denen jede eine separate Führungsrille oder einen Abschnitt einer Führungsrille ausbildet. Sofern die Teilschalen jeweils eine separate Führungsrille ausbilden, dienen diese der Führung jeweils einer umlaufenden Reihe der Kugeln, während bei der Ausbildung lediglich eines Abschnitts einer Führungsrille durch die Teilschalen diese gemeinsam der Führung einer umlaufenden Reihe der Kugeln dienen.

Durch die erfindungsgemäße Mehrteiligkeit der inneren und/oder der äußeren Lagerschale des Kugellagers wird ermöglicht, die Schultern der Führungsrillen relativ groß auszubilden, wodurch eine entsprechend hohe Tragfähigkeit des Kugellagers auch bei einer relativ hohen Kippbelastung, wie sie im Betrieb eines das Kugellager umfassenden Lenkgetriebes auftreten kann, erreicht wird.

Ein erfindungsgemäßes Lenkgetriebe, das für ein Lenksystem eines Kraftfahrzeugs vorgesehen ist, umfasst zumindest ein Zahnrad, ein damit kämmendes Schraubritzel (insbesondere Schneckenritzel) und eine das Schraubritzel umfassende Schraubritzelwelle, wobei die Schraubritzelwelle auf der einen Seite des Schraubritzels in einem erfindungsgemäßen Festlager gelagert ist und wobei der Außenring des Schwenkrings des Festlagers direkt oder indirekt und vorzugsweise unbeweglich in einem Gehäuse des Lenkgetriebes gelagert ist.

Ein erfindungsgemäßes Lenksystem umfasst zumindest ein erfindungsgemäßes Lenkgetriebe sowie einen drehantreibend mit der Schraubritzelwelle verbundenen Lenkmotor. Das Zahnrad des Lenkgetriebes kann weiterhin drehfest oder drehantreibend mit einer Lenkwelle, insbesondere einer Lenksäule, des Lenksystems verbunden sein. Das erfindungsgemäße Lenksystem kann insbesondere als Hilfskraftlenksystem ausgebildet sein, durch das mittels des Lenkmotors ein unterstützendes Drehmoment erzeugt werden kann, so dass ein von einem Fahrer eines das Hilfskraftlenksystem umfassenden Kraftfahrzeugs auf die Lenksäule für ein Lenken des Kraftfahrzeugs aufzubringendes Lenkmoment reduziert ist. Alternativ dazu besteht auch die Möglichkeit, das Lenksystem derart auszubilden, dass von dem Lenkmotor das gesamte für ein Lenken erforderliche Lenkmoment erzeugt wird.

Die Erfindung betrifft auch ein Kraftfahrzeug mit einem erfindungsgemäßen Lenksystem.

In einer bevorzugten Ausführungsform eines erfindungsgemäßen Festlagers kann vorgesehen sein, dass die innere Lagerschale mindestens und vorzugsweise exakt zwei Teilschalen umfasst und die äußere Lagerschale einteilig ausgebildet ist. Dadurch kann eine besonders vorteilhafte Herstellbarkeit für das Kugellager und damit das erfindungsgemäße Festlager realisiert werden. Unter einer "einteiligen Ausbildung" einer und insbesondere der äußeren Lagerschale wird erfindungsgemäß verstanden, dass die dazugehörige (vollständige) Führungsrille in einem einstückigen Bauteil ausgebildet ist. Dies soll nicht ausschließen, dass mit diesem Bauteil noch weitere Bauteile verbunden sind, die der entsprechenden Lagerschale zugeordnet werden können.

In einer weiterhin bevorzugten Ausgestaltung eines erfindungsgemäßen Festlagers kann zudem vorgesehen sein, dass das Kugellager einreihig ausgebildet ist. Alternativ dazu besteht die Möglichkeit, dass das Kugellager mehrreihig und insbesondere zweireihig ausgebildet ist. Ein mehrteiliges und insbesondere ein zweireihiges Kugellager kann sich durch eine besonders große Tragfähigkeit auszeichnen. Gleichzeitig kann dieses jedoch den Nachteil eines relativ großenßauraums, der für dessen Integration in ein erfindungsgemäßes Festlager, insbesondere entlang der Längs- beziehungsweise Rotationsachse des Kugellager (beziehungsweise der Ritzelwelle) erforderlich ist, aufweisen. Ein einreihiges Kugellager kann dagegen äußerst kompakt dimensioniert werden, wobei dennoch aufgrund der erfindungsgemäßen Ausgestaltung und der dadurch ermöglichten relativ großen Überdeckung, die die Führungsrillen bezüglich der Kugeln ausbilden, eine ausreichende Tragfähigkeit auch bei einer relativ großen Kippbelastung des Kugellagers bereitstellen

Bei einer einreihigen Ausgestaltung des Kugellagers eines erfindungsgemäßen Festlagers, bei dem folglich die Teilschalen der inneren und/oder äußeren Lagerschale jeweils nur einen Abschnitt einer Führungsrille ausbilden, kann weiterhin bevorzugt vorgesehen sein, dass die Teilschalen (zumindest einer, gegebenenfalls beider Lagerschale(n)) gegeneinander abgestützt sind. Diese Abstützung kann indirekt oder, besonders bevorzugt, direkt erfolgen. Bei der letztgenannten Ausgestaltung kann in vorteilhafter Weise erreicht werden, dass die von den beiden Abschnitten ausgebildete Führungsrille im Wesentlichen spaltfrei ist, was sich positiv auf die Verwendung des Kugellagers und damit des erfindungsgemäßen Festlagers auswirken kann.

Bei einer zweireihigen Ausgestaltung des Kugellagers eines erfindungsgemäßen Festlagers, bei dem die Teilschalen der inneren und/oder äußeren Lagerschale jeweils eine separate Führungsrille ausbilden, kann vorzugsweise vorgesehen sein, dass die Teilschalen (zumindest einer, gegebenenfalls beider Lagerschale(n)) einen Spalt begrenzen und demnach nicht direkt oder indirekt gegeneinander abgestützt sind. Dadurch kann eine relative Verschiebbarkeit dieser Teilschalen entlang der Längsbeziehungsweise Rotationsachse des Kugellagers realisiert werden, die vorteilhaft zur Einstellung einer weitgehenden Spielfreiheit der Anordnung der Kugeln innerhalb der Lagerschalen genutzt werden kann.

In einer weiterhin bevorzugten Ausgestaltung eines erfindungsgemäßen Festlagers kann vorgesehen sein, dass die Teilschalen mittels eines separaten (d.h. ausschließlich hierfür vorgesehenen) Befestigungselements zusammengehalten sind. Auf diese Weise kann insbesondere eine Montage eines erfindungsgemäßen Festlagers erleichtert werden, weil zunächst eine separate Montage des Kugellagers erfolgen und dieses dann als zusammenhängende Einheit bei der weiteren Montage des Festlagers gehandhabt werden kann.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausführungsbeispiels näher erläutert. In den Zeichnungen zeigt:
- Fig. 1:: ein erfindungsgemäßes Lenkgetriebe in einer Seitenansicht;
- Fig. 2:: einen Längsschnitt durch das Lenkgetriebe entlang der Schnittebene II - II in der Fig. 1;
- Fig. 3:: das Festlager des Lenkgetriebes gemäß den Fig. 1 und 2 in einer Ansicht von vorne;
- Fig. 4:: einen Längsschnitt durch das Festlager gemäß der Fig. 3;
- Fig. 5:: eine alternative Ausgestaltungsform eines Festlagers für ein Lenkgetriebe gemäß den Fig. 1 und 2 in einer Ansicht von vorne; und
- Fig. 6:: einen Längsschnitt durch das Festlager gemäß der Fig. 5.

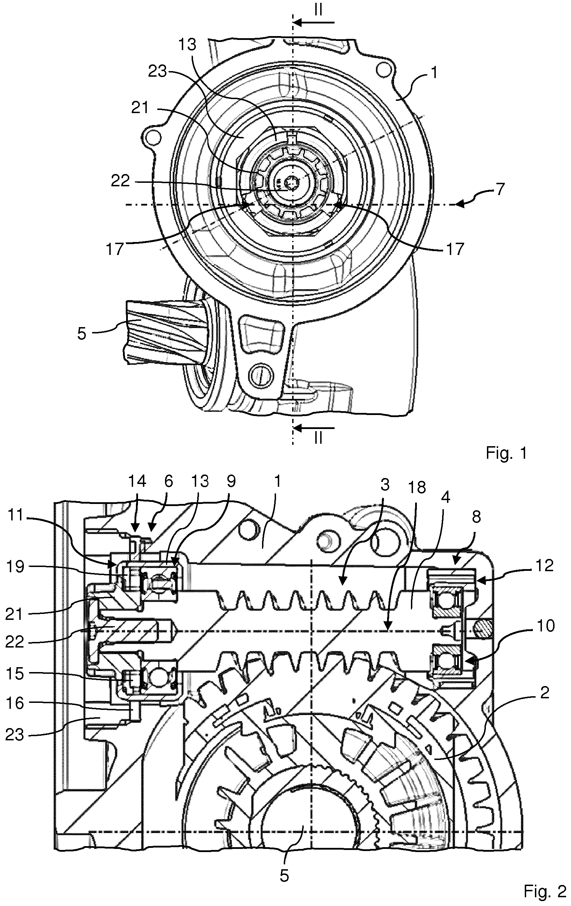

Die Fig. 1 und 2 zeigen die wesentlichen Bestandteile eines erfindungsgemäßen Lenkgetriebes für ein Lenksystem eines Kraftfahrzeugs. Dieses umfasst ein Gehäuse 1, innerhalb dessen ein Zahnrad 2 sowie ein mit dem Zahnrad 2 kämmendes Schraubritzel 3 gelagert sind. Das Schraubritzel 3 und eine das Schraubritzel 3 umfassende Schraubritzelwelle 4 sind in Form einer Schnecke integral ausgebildet.

Das Zahnrad 2 ist fest auf einer Abtriebswelle 5 (vgl. Fig. 1) des Lenkgetriebes befestigt. Diese Abtriebswelle 5, die im gezeigten Ausgestaltungsbeispiel eine Verzahnung für eine sichere drehfeste Verbindung mit dem Zahnrad 2 aufweist, kann beispielsweise mit einer zumindest in einem Abschnitt als Zahnstange ausgebildeten Lenkstange kämmen, wodurch diese eine Translationsbewegung durchführt, die in bekannter Weise über Radlenkhebel (nicht dargestellt) in eine Schwenkbewegung gelenkter Räder (nicht dargestellt) des Kraftfahrzeugs übersetzt werden kann. Bei der Abtriebswelle 5 kann es sich aber auch um eine Lenksäule des Hilfskraftlenksystems handeln, die mit einem Lenkrad verbunden ist und über ein Lenkritzel auf die Lenkstange wirkt.

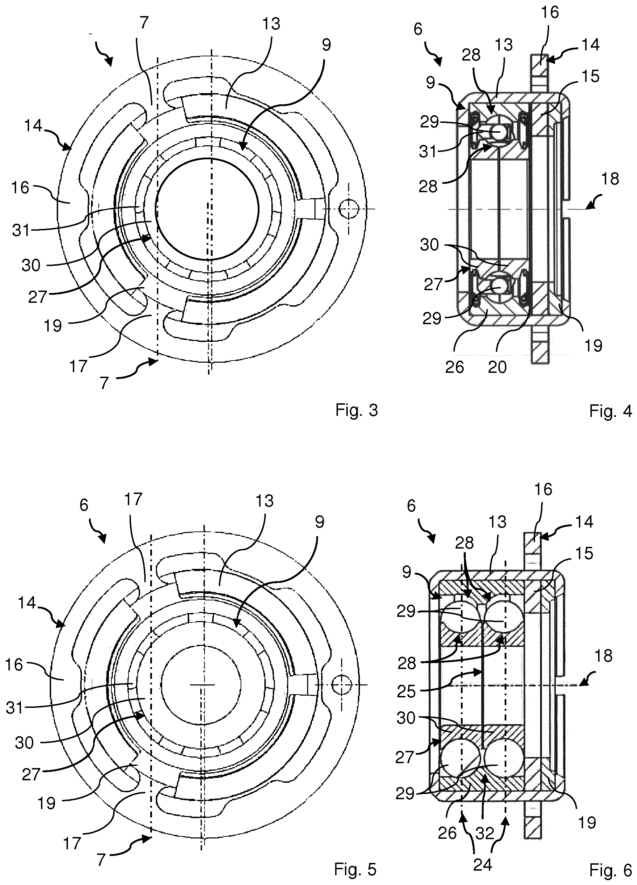

Die Schraubritzelwelle 4 weist ein antriebsseitiges Ende auf, über das diese mit der Abtriebswelle eines nicht dargestellten Lenkmotors (z.B. ein Elektromotor) verbindbar ist. Im Bereich dieses antriebsseitigen Endes ist die Schraubritzelwelle 4 mittels einer ersten Lagerung in dem Gehäuse 1 gelagert. Diese Lagerung ist als erfindungsgemäßes Festlager 6 ausgebildet, das ein Verschwenken der Schraubritzelwelle 4 um eine Schwenkachse 7 (vgl. Fig. 1 und 3) zulässt. Dieses Verschwenken bewirkt ein Auslenken des dem antriebsseitigen Ende gegenüberliegenden, freien Endes der Schraubritzelwelle 4, die dort mittels eines Loslagers 8 in einer entsprechenden Aufnahme des Gehäuses 1 gelagert ist. Dieses Loslager 8 ist so ausgebildet, dass es die sich aus dem Verschwenken der Schraubritzelwelle 4 ergebende Auslenkung dieses freien Endes zulässt.

Sowohl das Festlager 6 als auch das Loslager 8 umfassen jeweils ein Drehlager in Form eines Kugellagers 9, 10. In inneren Lagerschalen dieser Kugellager 9, 10 sind die entsprechenden Abschnitte der Schraubritzelwelle 4 gelagert, während äußere Lagerschalen der Kugellager 9, 10 in jeweils einer Lagervorrichtung 11, 12 gelagert sind, die wiederum in entsprechenden Aufnahmen des Gehäuses 1 aufgenommen sind. Die Lagervorrichtungen 11, 12 sind konstruktiv so ausgebildet, dass diese im Fall des Festlagers 6 das Verschwenken der Schraubritzelwelle 4 um die Schwenkachse 7 und im Fall des Loslagers 8 das Auslenken des freien Endes der Schraubritzelwelle 4 ermöglichen.

Hierzu umfasst die Lagervorrichtung 11 des Festlagers 6 eine Lagerhülse 13 mit kreisförmigem Querschnitt, die innenseitig in einem ersten Längsabschnitt das Kugellager 9 und in einem zweiten Längsabschnitt einen Innenring 15 eines Schwenkrings 14 aufnimmt. Der Innenring 15 des Schwenkrings 14 ist unter Zwischenschaltung einer Stützscheibe 19 drehfest und axial gesichert innerhalb der Lagerhülse 13 gelagert, wobei sich der Innenring 15 unter Zwischenschaltung einer Zwischenscheibe 20 an der äußeren Lagerschale 26 des Wälzlagers 9 abstützt. Der Schwenkring 14 umfasst neben dem Innenring 15 noch einen Außenring 16. Der Außenring 16 ist über zwei Torsionsstege 17 (vgl. Fig. 1 und 3) mit dem Innenring 15 verbunden. Der Außenring 16, der Innenring 15 und die Torsionsstege 17 sind beispielsweise einstückig aus beispielsweise Federstahl ausgebildet.

Eine axiale Lagesicherung des Kugellagers 9 auf der Schraubritzelwelle 4 erfolgt unter Zwischenschaltung eines Druckstücks 21 mittels einer Schraube 22, die in ein Innengewinde, das in das entsprechende Ende der Schraubritzelwelle 4 integriert ist, eingeschraubt ist. Eine axiale Lagesicherung des Außenrings 16 des Schwenkrings 14 innerhalb des Gehäuses 1 erfolgt mittels eines Schraubrings 23, der ein Außengewinde aufweist, das in ein entsprechendes Innengewinde des Gehäuses 1 eingeschraubt ist.

Die zwei Torsionsstege 17 bilden die Schwenkachse 7 aus, um die der Außenring 16 relativ zu dem Innenring 15 verschwenkbar ist. Die Torsionsstege 17 und damit die Schwenkachse 7 verlaufen dabei jedoch nicht durch das Zentrum des Schwenkrings 14 und damit des Querschnitts der Schraubritzelwelle 4, sondern radial versetzt dazu (vgl. Fig. 3). Die Schwenkachse 7 schneidet somit nicht die Längsachse 18 der Schraubritzelwelle 4. Durch den radialen Versatz der Torsionsstege 17 zu dem Zentrum des Schwenkrings 14 wird die Schwenkachse 7 in die Nähe des Außenumfangs der Schraubritzelwelle 4 verlagert, wodurch die Ausbildung von Reaktionsmomenten, die sich infolge der beim Zahneingriff von Schraubritzel 3 und Zahnrad 2 ergebenden Verzahnungskräfte in Verbindung mit dem Abstand der Wirkungslinie dieser Verzahnungskräfte von der Schwenkachse 7 ergeben beziehungsweise ergeben würden, verringert oder vermieden werden können. Zur möglichst vollständigen Vermeidung der Reaktionsmomente ist vorgesehen, dass die Schwenkachse 7 innerhalb derjenigen Tangentialebene liegt, die in dem Berührpunkt der beiden Teil- beziehungsweise Wälzkreise von Zahnrad 2 und Schraubritzel 3 ausgebildet ist.

Die Torsionsstege 17 des Schwenkrings 14 ermöglichen nicht nur ein Verschwenken des Außenrings 16 zu dem Innenring 15 und damit der Schraubritzelwelle 4 relativ zu dem Zahnrad 2 beziehungsweise dem Gehäuse 1 sondern bewirken gleichzeitig die Federkraft, durch die das Schraubritzel 3 der Schraubritzelwelle 4 in die Verzahnung des Zahnrad 2 gedrückt wird, um ein möglichst geringes Getriebespiel und damit eine entsprechend geringe Geräuschentwicklung im Betrieb des Lenkgetriebes, insbesondere beim sogenannten Wechsellenken, zu erreichen. Diese Federkraft ergibt sich daraus, dass bei der Montage des Lenkgetriebes die Schraubritzelwelle 4 soweit infolge eines Kontakts mit dem Zahnrad 2 ausgelenkt wird, dass sich eine ausreichende Torsion der Torsionsstege 17 ergibt, wodurch die elastischen Rückstellmomente, die aus der Torsion der Torsionsstege 17 resultieren, entgegen dieser Auslenkung der Schraubritzelwelle 4 wirken und diese somit gegen das Zahnrad 2 beaufschlagen.

Die Integration des Festlagers in das Lenkgetriebe sieht demnach eine relativ kleine (z.B. um 0,7°) federbelastete Schrägstellung des Kugellagers 9 beziehungsweise von dessen Längsachse 18 relativ zu dem Außenring 16 des Schwenkrings 14 beziehungsweise zu dessen Längsachse vor. Daraus kann eine erhebliche Kippbelastung des Kugellagers 9 resultieren, die sich grundsätzlich negativ auf die Tragfähigkeit und damit die Lebensdauer eines solchen Kugellagers 9 auswirkt. Um diesen negativen Einfluss der Kippbelastung auf die Tragfähigkeit des Kugellagers 9 zu kompensieren ist vorgesehen, die Höhe der Schultern der von der äußeren Lagerschale 26 und der inneren Lagerschale 27 ausgebildeten Führungsrillen 28 und damit die Überdeckung der Führungsrillen 28 bezüglich der Kugeln 29 des Kugellagers 9 relativ groß auszubilden. Diese relativ große Überdeckung führt zu einem relativ schmalen Ringspalt, der zwischen der äußeren Lagerschale 26 und der inneren Lagerschale 27 des Kugellagers 9 ausgebildet ist. Dieser relativ schmale Spalt würde eine Montage des Kugellagers 9 bei einer Ausgestaltung in herkömmlicher Bauweise mit sowohl einteiliger äußerer Lagerschale als auch einteiliger innerer Lagerschale verhindern. Erfindungsgemäß wird eine solche Montage jedoch dadurch ermöglicht, dass, im vorliegenden Ausgestaltungsbeispiel, die innere Lagerschale 27 aus zwei Teilschalen 30 ausgebildet ist. Daher kann bei einer Montage des Kugellagers 9 zunächst die äußere Lagerschale 26 und eine erste der Teilschalen 30 der inneren Lagerschale 27 derart zueinander positioniert werden, dass diese Teilschale 30 vorzugsweise möglichst koaxial innerhalb der äußeren Lagerschale 26 angeordnet ist. Daraufhin können die Kugeln29, vorzugsweise direkt in Kombination mit einem Kugelkäfig 31, in die von der äußeren Lagerschale 26 ausgebildete Führungsrille 28 sowie in den von der ersten Teilschale 30 ausgebildeten Abschnitt der Führungsrille 28 der inneren Lagerschale 27 angeordnet werden. Anschließend kann die zweite Teilschale 30 montiert werden. Im montierten Zustand ist vorgesehen, dass sich die beiden Teilschalen 30 direkt gegeneinander abstützen und dadurch ein im Wesentlichen spaltfreien Übergang der zwei Abschnitte, die gemeinsam die Führungsrille 28 der inneren Lagerschale 27 ausbilden, erreicht wird. Ein Zusammenhalt der beiden Teilschalen 30 kann dann mittels mindestens eines Befestigungselements (nicht dargestellt), beispielsweise in Form einer Kunststoffhülse, in Form von Kunststoffklipsen und/oder in Form einer geschlitzten Blechhülse gesichert werden, um bei einer Montage des Festlagers 6 das Kugellager 9 als zusammenhängende Einheit handhaben zu können. Nach einer Integration des Festlagers 6 in das Lenkgetriebe können das oder die Befestigungselemente dann wieder entfernt werden, weil dann ein Zusammenhalt des Kugettagers 9 durch die beschriebene Integration in das Lenkgetriebe gesichert ist. Es sind jedoch auch Ausgestaltungen möglich, bei der das oder die Befestigungselemente auch nach einer Integration des Festlagers 6 in das Lenkgetriebe montiert bleiben.

Die Fig. 5 und 6 zeigen eine alternative Ausgestaltung eines Festlagers 6, das für eine Integration in ein Lenkgetriebe gemäß den Fig. 1 und 2 vorgesehen sein kann. Wesentliches Unterscheidungsmerkmal zu dem Festlager 6 gemäß den Fig. 1 bis 4 ist die Verwendung eines zweireihigen Kugellagers 9 anstelle eines einreihigen Kugellagers 9. Hierzu umfasst das Kugellager 9 des Festlagers 6 gemäß den Fig. 5 und 6 wiederum eine einteilige äußere Lagerschale 26, in der innenseitig zwei Führungsrillen 28 für jeweils eine Reihe von Kugeln 29 ausgebildet sind. Diese Führungsrillen 28 sind dabei so ausgebildet, dass diese von einem mittig (bezüglich der Längserstreckung des Kugellagers 9) angeordneten Steg 32 jeweils mit einem dem Radius der Kugeln 29 im Wesentlichen entsprechenden Radius in Richtung jeweils eines längsaxialen Endes der äußeren Lagerschale 26 gekrümmt verlaufen, bis diese in jeweils einen parallel beziehungsweise koaxial zu der Längsachse 18 des Kugellagers 9 verlaufenden Abschnitt übergehen. Das Kugellager 9 des Festlagers 6 gemäß den Fig. 5 und 6 ist demnach in der Art eines zweireihigen Schrägkugellagers in O-Anordnung ausgeführt.

Die innere Lagerschale 27 des Kugellagers 9 besteht dagegen wiederum aus zwei Teilschalen 30, von denen jede jeweils eine (vollständige) Führungsrille 28 für die Kugeln 29 (jeweils mit einem Querschnittradius, der im Wesentlichen dem Radius der Kugel 29 entspricht) ausbildet. Diese Führungsrillen 28 sind, anders als die Führungsrillen 28 der äußeren Lagerschale 26, jedoch spiegelsymmetrisch bezüglich jeweils einer mittig bezüglich der Längserstreckung der Teilschalen 30 angeordneten Radialachse 24 ausgebildet.

Anders als bei dem Kugellager 9 des Festlagers 6 gemäß den Fig. 1 bis 4 ist bei dem Kugellager 9 des Festlagers 6 gemäß den Fig. 5 und 6 vorgesehen, dass im montierten Zustand (auch unter Berücksichtigung möglicher Form und Lagetoleranzen) zwischen den Teilschalen 30 der inneren Lagerschale 27 des Kugellager 9 ein umlaufende Spalt 25 ausgebildet ist, wodurch sichergestellt werden kann, dass mittels der Schraube 22 und dem Druckstück 21 (vgl. Fig. 2) eine weitgehende Spielfreiheit der Kugeln 29 innerhalb der Lagerschalen 26, 27 bei gleichzeitig möglichst geringem Reibungswiderstand eingestellt werden kann. Eine Ausgestaltung eines erfindungsgemäßen Festlagers 6 gemäß den Fig. 5 und 6 ohne Spalt 25 zwischen: den Teilschalen 30 ist gleichfalls möglich.

Ansonsten entspricht das Festlager 6 in der Ausgestaltung gemäß den Fig. 5 und 6 dem Festlager 6 gemäß den Fig. 1 bis 4. Eine Ausnahme ist jedoch, dass für dieses keine Zwischenscheibe 20 vorgesehen ist. Selbstverständlich besteht jedoch auch die Möglichkeit, auch in dieses Festlager 6 eine entsprechende Zwischenscheibe 20 zu integrieren.

Grundsätzlich besteht auch die Möglichkeit, das Kugellager 9 bei einem Festlager 6 gemäß den Fig. 3 und 4 mit einem Spalt 25 auszubilden, wie er bei dem Kugellager 9 des Festlagers 6 gemäß den Fig. 5 und 6 vorgesehen ist.

### Bezuaszeichenliste

- 1: Gehäuse
- 2: Zahnrad
- 3: Schraubritzel
- 4: Schraubritzelwelle
- 5: Abtriebswelle
- 6: Festlager
- 7: Schwenkachse
- 8: Loslager
- 9: Kugellager des Festlagers
- 10: Kugellager des Loslagers
- 11: Lagervorrichtung des Festlagers
- 12: Lagervorrichtung des Loslagers
- 13: Lagerhülse
- 14: Schwenkring
- 15: Innenring des Schwenkrings
- 16: Außenring des Schwenkrings
- 17: Torsionssteg
- 18: Längsachse der Schraubritzelwelle / des Kugellagers
- 19: Stützscheibe
- 20: Zwischenscheibe
- 21: Druckstück
- 22: Schraube
- 23: Schraubring
- 24: Radialachse
- 25: Spalt
- 26: äußere Lagerschale eines Kugellagers
- 27: innere Lagerschale eines Kugellagers
- 28: Führungsrille
- 29: Kugel eines Kugellagers
- 30: Teilschalen einer Lagerschale
- 31: Kugelkäfig
- 32: Steg

## Patentansprüche

1. Festlager (6) für ein Lenkgetriebe mit einem Kugellager (9), das eine innere Lagerschale (27), die zur Aufnahme einer Ritzelwelle (4) des Lenkgetriebes vorgesehen ist, und eine äußere Lagerschale (26), die in einer Lagerhülse (13) aufgenommen ist, umfasst, wobei die innere Lagerschale (27) und die äußere Lagerschale (26) jeweils mindestens eine Führungsrille (28) zur Aufnahme und Führung von Kugeln (29) des Kugellagers (9) aufweisen, sowie mit einem Schwenkring (14), der einen Außenring (16) sowie einen Innenring (15) aufweist, die über einen oder mehrere Torsionsstege (17) verschwenkbar verbunden sind, wobei der Innenring (15) mit der Lagerhülse (13) verbunden ist und der Außenring (16) zur Lagerung des Festlagers (6) in einem Gehäuse (1) des Lenkgetriebes vorgesehen ist, **dadurch gekennzeichnet, dass** die innere Lagerschale (27) und/oder die äußere Lagerschale (26) mindestens zwei Teilschalen (30) umfasst, von denen jede eine separate Führungsrille (28) oder einen Abschnitt einer Führungsrille (28) ausbildet.

2. Festlager (6) gemäß Anspruch 1, **dadurch gekennzeichnet, dass** die innere Lagerschale (27) mindestens zwei Teilschalen (30) umfasst und die äußere Lagerschale (26) einteilig ausgebildet ist.

3. Festlager (6) gemäß Anspruch 1 oder 2, **dadurch gekennzeichnet, dass** das Kugellager (9) einreihig ausgebildet ist.

4. Festlager (6) gemäß einem der vorhergehenden Ansprüche, **dadurch gekennzeichnet, dass** die Teilschalen direkt oder indirekt gegeneinander abgestützt sind.

5. Festlager (6) gemäß einem der vorhergehenden Ansprüche, **dadurch gekennzeichnet, dass** das Kugellager (9) mehrreihig und insbesondere zweireihig ausgebildet ist.

6. Festlager (6) gemäß einem der vorhergehenden Ansprüche, **dadurch gekennzeichnet, dass** die Teilschalen (30) einen Spalt (25) begrenzen.

7. Festlager (6) gemäß einem der vorhergehenden Ansprüche, **dadurch gekennzeichnet, dass** die Teilschalen (30) mittels eines separaten Befestigungselements zusammengehalten sind.

8. Lenkgetriebe für ein Lenksystem eines Kraftfahrzeugs mit einem Zahnrad (2), einem damit kämmenden Schraubritzel (3) und einer das Schraubritzel (3) umfassenden Schraubritzelwelle (4), wobei die Schraubritzelwelle (4) auf der einen Seite des Schraubritzels (3) in einem Festlager (6) gemäß einem der vorhergehenden Ansprüche gelagert ist und wobei der Außenring (16) des Schwenkrings (14) des Festlagers (6) direkt oder indirekt in einem Gehäuse (1) des Lenkgetriebes gelagert ist.

9. Lenksystem mit einem Lenkgetriebe gemäß Anspruch 8 und einem drehantreibend mit der Schraubritzelwelle (4) des Lenkgetriebes verbundenen Lenkmotor.

## Claims

1. Fixed bearing (6) for a steering gear, having a ball bearing (9) which comprises an inner bearing shell (27), which is provided for receiving a pinion shaft (4) of the steering gear, and an outer bearing shell (26), which is received in a bearing sleeve (13), wherein the inner bearing shell (27) and the outer bearing shell (26) each have at least one guide groove (28) for receiving and guiding balls (29) of the ball bearing (9), and having a pivot ring (14) which has an outer ring (16) and an inner ring (15) which are connected pivotably by means of one or more torsion webs (17), wherein the inner ring (15) is connected to the bearing sleeve (13), and the outer ring (16) is provided for the mounting of the fixed bearing (6) in a housing (1) of the steering gear, **characterized in that** the inner bearing shell (27) and/or the outer bearing shell (26) comprises at least two shell parts (30), each of which forms a separate guide groove (28) or a portion of a guide groove (28).

2. Fixed bearing (6) according to Claim 1, **characterized in that** the inner bearing shell (27) comprises at least two shell parts (30), and the outer bearing shell (26) is formed as a single piece.

3. Fixed bearing (6) according to Claim 1 or 2, **characterized in that** the ball bearing (9) is of single-row form.

4. Fixed bearing (6) according to any of the preceding claims, **characterized in that** the shell parts are supported directly or indirectly against one another.

5. Fixed bearing (6) according to any of the preceding claims, **characterized in that** the ball bearing (9) is of multi-row, and in particular two-row, form.

6. Fixed bearing (6) according to any of the preceding claims, **characterized in that** the shell parts (30) delimit a gap (25).

7. Fixed bearing (6) according to one of the preceding claims, **characterized in that** the shell parts (30) are held together by means of a separate fastening element.

8. Steering gear for a steering system of a motor vehicle, having a toothed wheel (2), having a helical pinion (3) which meshes with said toothed wheel, and having a helical pinion shaft (4) which comprises the helical pinion (3), wherein the helical pinion shaft (4) is mounted on one side of the helical pinion (3) in a fixed bearing (6) according to any of the preceding claims, and wherein the outer ring (16) of the pivot ring (14) of the fixed bearing (6) is mounted directly or indirectly in a housing (1) of the steering gear.

9. Steering system having a steering gear according to Claim 8 and having a steering motor which is connected with rotational driving action to the helical pinion shaft (4) of the steering gear.

## Revendications

1. Palier fixe (6) pour un mécanisme de direction, comprenant un roulement à billes (9) qui comprend une coque de palier intérieure (27) qui est prévue pour recevoir un arbre de pignon (4) du mécanisme de direction et une coque de palier extérieure (26) qui est reçue dans une douille palier (13), la coque de palier intérieure (27) et la coque de palier extérieure (26) présentant chacune au moins une rainure de guidage (28) pour recevoir et guider des billes (29) du roulement à billes (9), et comprenant un anneau pivotant (14) qui présente une bague extérieure (16) ainsi qu'une bague intérieure (15), qui sont connectées de manière pivotante par le biais d'une ou plusieurs nervures de torsion (17), la bague intérieure (15) étant connectée à la douille palier (13) et la bague extérieure (16) étant prévue pour supporter le palier fixe (6) dans un boîtier (1) du mécanisme de direction, **caractérisé en ce que** la coque de palier intérieure. (27) et/ou la coque de palier extérieure (26) comprennent au moins deux coques partielles (30) dont chacune constitue une rainure de guidage séparée (28) ou une portion d'une rainure de guidage (28).

2. Palier fixe (6) selon la revendication 1, **caractérisé en ce que** la coque de palier intérieure (27) comprend au moins deux coques partielles (30) et la coque de palier extérieure (26) est réalisée d'une seule pièce.

3. Palier fixe (6) selon la revendication 1 ou 2, **caractérisé en ce que** le roulement à billes (9) est réalisé avec une seule rangée.

4. Palier fixe (6) selon l'une quelconque des revendications précédentes, **caractérisé en ce que** les coques partielles sont supportées l'une contre l'autre directement ou indirectement.

5. Palier fixe (6) selon l'une quelconque des revendications précédentes, **caractérisé en ce que** le roulement à billes (9) est réalisé en plusieurs rangées et notamment en deux rangées.

6. Palier fixe (6) selon l'une quelconque des revendications précédentes, **caractérisé en ce que** les coques partielles (30) délimitent une fente (25) .

7. Palier fixe (6) selon l'une quelconque des revendications précédentes, **caractérisé en ce que** les coques partielles (30) sont retenues ensemble au moyen d'un élément de fixation séparé.

8. Mécanisme de direction pour un système de direction d'un véhicule automobile comprenant une roue dentée (2), un pignon fileté (3) s'engrenant dans celle-ci et un arbre de pignon fileté (4) entourant le pignon fileté (3), l'arbre de pignon fileté (4) étant supporté sur un côté du pignon fileté (3) dans un palier fixe (6) selon l'une quelconque des revendications précédentes et la bague extérieure (16) de l'anneau pivotant (14) du palier fixe (6) étant supportée directement ou indirectement dans un boîtier (1) du mécanisme de direction.

9. Système de direction comprenant un mécanisme de direction selon la revendication 8 et un moteur de direction connecté par entraînement en rotation à l'arbre de pignon fileté (4) du mécanisme de direction.
